# EUROPÄISCHE PATENTSCHRIFT

(11) **EP 1 040 114 B1**
(45) Veröffentlichungstag und Bekanntmachung des Hinweises auf die Patenterteilung: **12.03.2003**
(21) Anmeldenummer: 98965187.2
(22) Anmeldetag: 26.11.1998
(51) Int. Cl.: C07F 3/00, C07F 3/04, C08F 4/52, C08F 236/10

(54) **VERFAHREN ZUR HERSTELLUNG VON ERDALKALIDIORGANYLVERBINDUNGEN**
METHOD FOR PRODUCING DI-ORGANO ALKALINE-EARTH COMPOUNDS
PROCEDE DE PREPARATION DE COMPOSES DIORGANYLE ALCALINO-TERREUX

(30) Priorität: 09.12.1997 DE 19754504
(43) Veröffentlichungstag der Anmeldung: 04.10.2000
(73) Patentinhaber: BASF AKTIENGESELLSCHAFT, 67056 Ludwigshafen (DE)
(72) Erfinder: KNOLL, Konrad, D-67069 Ludwigshafen (DE); BRINTZINGER, Hans-Herbert, CH-8274 Taegerswilen (CH); WEEBER, Armin, D-78464 Konstanz (DE)
(86) Internationale Anmeldenummer: EP9807637
(87) Internationale Veröffentlichungsnummer: WO99029698

(56) Entgegenhaltungen:
- US-A- 3 718 703
- US-A- 3 763 251
- CHEMICAL ABSTRACTS, vol. 118, no. 25, 21. Juni 1993 (1993-06-21) Columbus, Ohio, US; abstract no. 254984, BURKEY, D.J. ET AL.: "encapsulated alkaline-earth metallocenes. 2. triisopropylcyclopentadienyl systems, ((me2ch)3c5h2)2m(thf)n (m = calcium, strontium, barium;n = 0-2) and the crystal structure of ((me2ch)3c5h2)2ba(thf)2" XP002097803 & ORGANOMETALLICS, Bd. 12, Nr. 4, 1993, Seiten 1331-1337,
- CHEMICAL ABSTRACTS, vol. 91, no. 6, 6. August 1979 (1979-08-06) Columbus, Ohio, US; abstract no. 39948, BASOVA, R.V. ET AL.: "study of the kinetics of butadiene polymerization in the presence of an organostrontium initiator in tetrahydrofuran" XP002097804 & VYSOKOMOL. SOEDIN., SER. B, Bd. 21, Nr. 4, 1979, Seiten 296-298,
- CHEMICAL ABSTRACTS, vol. 85, no. 10, 6. September 1976 (1976-09-06) Columbus, Ohio, US; abstract no. 63411, NAKHMANOVICH, B.I. ET AL.: "kinetics of polymerization of butadiene and styrene in the presence of dibenzylbarium in a tetrahydrofuran medium" XP002097805 & DOKL. AKAD. NAUK SSSR, Bd. 228, Nr. 1, 1976, Seiten 131-144,

## Beschreibung

Die Erfindung betrifft ein Verfahren zur Herstellung von Erdalkalidiorganylverbindungen.

Des Weiteren betrifft die Erfindung ein Verfahren zur Polymerisation von anionisch polymerisierbaren Monomeren unter Verwendung einer nach dem oben genannten Verfahren hergestellten Erdalkalidiorganylverbindungen als Polymerisationsinitiator.

Die Synthese von Erdalkalidiorganylverbindungen durch Reaktion von Diorganylverbindungen des Quecksilbers mit elementarem Calcium, Strontium oder Barium wurde in der US-Patentschrift 3,718,703 beschrieben. Dieser Syntheseweg liefert die Diorganylerdalkaliverbindungen zwar in guten Ausbeuten, ist aber aufgrund der Verwendung von giftigen Quecksilberverbindungen nicht gewünscht.

Metallierung von CH-aciden organischen Verbindungen mit Calcium, Strontium oder Barium in aprotischen, polaren Lösungsmitteln sind in den US-Patentschriften 3,965,080 und 4,012,336 beschrieben. Auf diese Weise läßt sich beispielsweise Dixanthenylbarium herstellen.

Russian Chemical Reviews, Vol. 50, 1981, S 601 - 614 gibt einen Überblick über weitere Synthesemöglichkeiten und die Verwendung von Erdalkaliorganylen in der anionischen Polymerisation von ungesättigten Monomeren. Die bekannten Synthesen für Erdalkaliorganyle sind teilweise aufwendig oder liefern die gewünschten Verbindungen in geringen Ausbeuten oder mit Nebenprodukten verunreinigt.

Burkey et al. beschreiben in Organometallics 12 (1993), Seiten 1331 - 1337 lösungsmittelfreie und mit Tetrahydrofuran (THF) solvatisierte Erdalkalimetallocene, die durch Umsetzung von Kaliumcyclopentadienid mit einem Erdalkalijodid erhalten werden.

Aufgabe der vorliegenden Erfindung war es daher, ein wirtschaftliches Verfahren zur Herstellung von Erdalkalidiorganylverbindungen in hohen Ausbeuten und hoher Reinheit mit leicht zugänglichen und gut handhabbaren Ausgangsverbindungen bereitzustellen.

Demgemäß wurde ein Verfahren zur Herstellung von Erdalkalidiorganylverbindungen gefunden, wobei man ein Metallorganyl RₙM² mit einem kovalenten Metall-Kohlenstoff-Bindungsanteil mit einem Erdalkalisalz M¹Xₘ umsetzt.

Des Weiteren wurde ein Verfahren zur Polymerisation von anionisch polymerisierbaren Monomeren gefunden, wobei man als Polymerisationsinitiator eine Erdalkalidiorganylverbindungen, hergestellt nach den Verfahren gemäß den Ansprüchen 1 bis 5 verwendet.

Als Metallorganyle für das erfindungsgemäße Verfahren zur Herstellung der Erdalkalidiorganylverbindungen können alle üblichen Metallorganyle mit einem kovalenten Metall-Kohlenstoff-Bindungsanteil verwendet werden. Bevorzugt verwendet man Lithium-, Natrium-, Kalium oder Magnesiumorganyle, insbesondere die in der Regel besser löslichen Lithium- oder Magnesiumorganyle. Als Organyle R kommen vorzugsweise σ - gebundene Kohlenwasserstoffreste mit 1 bis 25 C-Atomen in Betracht, insbesondere C₁ - C₂₅ -Alkyle, wie Methyl, Ethyl, n-Propyl, iso-Propyl, n-Butyl, iso-Butyl, tert.-Butyl, Pentyl, Hexyl, Heptyl, Octyl, Nonyl, Dodecyl, Octadecyl, C₆ - C₂₅ -Aryle, wie Phenyl oder substituierte Phenyle, wie 3,5-Dimethylphenyl, p-t-Butylphenyl, p-Octylphenyl, p-Dodecylphenyl-, o-, m-, p-Tolyl, Biphenyl, Naphthyl, Aralkyle, wie Benzyl, Phenylethyl, 2-Phenylpropyl, 6-Phenylhexyl, p-Methylphenylethyl, p-t-Amylbenzyl, C₃ - C₁₂ -Alkenyle, wie Vinyl, Allyl, 3-Butenyl-, 4-Hexenyl-, C₃ - C₁₂ -Cycloalkyle, wie Cyclopropyl, Cyclobutyl, Cyclopentyl, Cyclohexyl, Cyclooctyl, C₃ - C₁₂ -Cycloalkenyle, wie Cyclohexenyl oder Cyclooctenyl. Die Organyle R können funktionelle Gruppen tragen, die sich inert gegenüber der Metall-Kohlenstoffbindung verhalten. Beispiele hierfür sind Trimethylsilyl-, Trimethylsiloxy-, Ether-, Dialkylamino- oder Cycloalkylaminogruppen. Die ganze Zahl n ist 1, wenn M² ein Alkalimetall bedeutet, bzw. 2 wenn M² Magnesium bedeutet. Besonders bevorzugte Metallorganyle sind Benzyllithium und Dibenzylmagnesium. Die Metallorganyle liegen häufig in Form von Addukten mit Lösungsmitteln wie Tetrahydrofuran, Dioxan oder Komplexbildnern wie Tetramethylethylendiamin oder Kronenethern vor. Die Herstellung der Metallorganyle ist an sich bekannt. Sie lassen sich beispielsweise durch Umsetzung von Lithium bzw. Magnesium mit den entsprechenden Organylhalogeniden in organischen Lösungsmitteln, wie Pentan, Hexan oder Diethylether herstellen.

Als Erdalkalimetalle M¹ der eingesetzten Erdalkalisalze M¹Xₘ kommen vorzugsweise Calcium, Strontium und Barium in Betracht. Sie werden in Form ihrer Salze X als Halogenide, Amide, Phosphide, Alkyloxide oder Aryloxide eingesetzt, wobei m eine ganze Zahl 1 oder 2 entsprechend der Wertigkeit von X bedeutet. Bevorzugt werden die leicht zugänglichen Bis(trimethylsilyl)amide oder die 2,4,6-Tris(tert-butyl)phenolate verwendet. Die Erdalkalisalze lassen sich beispielsweise durch Umsetzung der Erdalkalimetalle mit den entsprechenden Halogensäuren, Aminen, Phosphinen, Alkyl- oder Arylhydroxide unter Wasserstoffabspaltung gewinnen. Verfahren zur Herstellung der Etherkomplexe durch Umsetzung von Calcium, Strontium und Barium in mit Ammoniakgas gesättigter etherischer Lösung sind beispielsweise von S. R. Drake et al., Main Group Chemistry 14) 1991, Seite 243, Polyhedron (12) 1993, Seit 2307 - 2311 oder Journal of the Chemical Society, Chemical Communications 1991, Seite 517 - 519 beschrieben.

Bevorzugt wird das Verfahren zur Herstellung von Erdalkaliorganylverbindungen R₂M¹ mit zwei gleichen Organylen R, sogenannten homoleptischen Erdalkaliverbindungen, verwendet. Bei Verwendung von gemischten Metallorganylen, beispielsweise Butyl-Octylmagnesium oder Mischungen von verschiedenen Metallorganylen sind auch heteroleptische Erdalkalidiorganyle zugänglich.

Bevorzugt wird die erfindungsgemäße Umsetzung der Metallorganyle RₙM² mit den Erdalkalisalzen M¹Xₘ in einem organischen Lösungsmittel oder Lösungsmittelgemisch durchführt, in dem die entstehende Erdalkalidiorganylverbindungen das niedrigste Löslichkeitsprodukt aller Edukte und Produkte besitzen. Als Lösungsmittel oder Lösungsmittelkomponenten kommen aliphatische oder aromatische, aprotische Lösungsmittel wie aliphatische oder cycloaliphatische Ether, beispielsweise Dimethylether, Diethylether, Dibutylether, Diisopropylether, Dioxan oder Tetrahydrofuran, aliphatische und cycloaliphatische Kohlenwasserstoffe, wie Pentan, Hexan, Oktan, Cyclohexan oder Cyclooktan oder aromatische Kohlenwasserstoffe, wie Toluol oder Ethylbenzol in Frage.

Im allgemeinen wird das Metallorganyl RₙM² mit dem Erdalkalisalz M¹Xₘ in stöchiometrisch equivalenten Mengen umgesetzt.

In einer bevorzugten Ausführungsform wird das Erdalkalisalz in einem polaren, aprotischen Lösungsmittel gelöst und tropfenweise mit einer Lösung des Metallorganyls versetzt und der sich bildende Niederschlag filtriert und gewaschen.

Die so erhaltene Erdalkalidiorganylverbindung kann gegebenenfalls nach den bekannten Verfahren der metallorganischen Chemie weiter gereinigt werden. Beispielsweise kann die Erdalkalidiorganylverbindung in einem Lösungsmittel gelöst und mit einem Fällungsmittel versetzt oder überschichtet werden.

Die Temperatur für die Umsetzung ist unkritisch. Sie richtet sich natürlich nach den Schmelz- und Siedepunkten der verwendeten Lösungsmittel, sowie nach der Stabilität der Erdalkalidiorganylverbindung. Die Umsetzung erfolgt in der Regel bei Temperaturen im Bereich von - 80 bis + 50°C, bevorzugt im Bereich von 0 bis 30°C.

Die nach dem erfindungsgemäßen Verfahren hergestellten Erdalkalidiorganylverbindungen eignen sich als Polymerisationsinitiatoren für anionisch polymerisierbare Monomeren, wie Diene, Styrol, Acrylate, Methacrylate, Acrylnitrile und Vinylchlorid. Insbesondere eignen sie sich zur Homo- und Copolymerisation von Butadien, Isopren und Styrol.

Zur Verbesserung der Thermostabilität (die Erdalkalidiorganylverbindungen niederer Alkyle sind in der Regel bei Raumtemperatur thermisch instabil) aber auch zur Verbesserung der Löslichkeit können die Erdalkalidiorganylverbindungen mit 1,1-Diphenylethylen umgesetzt werden. Dies ist insbesondere dann von Bedeutung, wenn man die Polymerisation in Abwesenheit von polaren Lösungsmitteln durchführen will.

### Beispiele:

Alle Arbeiten wurden unter Schutzgas und in frisch über Natrium destillierten Lösungsmittel durchgeführt.

Bariumbis(bistrimethylsilyl)amid * 2 Tetrahydrofuran wurde nach der Vorschrift in B. A. Vaartstra et al., Inorganic Chemistry 1991 (Vol. 30), Seite 121-125 durch Umsetzung von Barium mit Bistrimethylsilylamin erhalten.

Strontiumbis(bistrimethylsilyl)amid * 2 Tetrahydrofuran wurde nach der Vorschrift in S. R. Drake et al., Journal of the Chemical Society, Chemical Communications 1991, Seite 517 - 519 erhalten.

Strontiumbis-(2,4,6-tri-tert.-butylphenolat) * 3 Tetrahydrofuran wurde nach der Vorschrift von S. R. Drake et al., Polyhedron (11) 1992, Seite 1995 - 2007 erhalten.

Dibenzylmagnesium * Dioxan wurde durch Grignardreaktion von Magnesium mit Benzylbromid nach Y Pocker et al., Journal of the American Chemical Society, 1968 (Vol. 90) Seite 6764 erhalten.

Die Herstellung von Benzyllithium * Tetramethylethylendiamin erfolgte nach der in B.J. Wakefield, Organolithium Methods, Academic Press 1988, auf Seite 38 angegebenen Vorschrift.

### Herstellung von Dibenzylbarium

### Beispiel 1:

### Herstellung von Dibenzylbarium durch Umsetzung von Bariumbis(bistrimethylsilyl)amid * 2 Tetrahydrofuran und Dibenzylmagnesium * Dioxan

Zu einer Lösung von 4,35 g (14,8 mmol) Dibenzylmagnesium * Dioxan in 75 ml Toluol/Diethylether (4/1 Vol.-%) wurden tropfenweise innerhalb von 10 Minuten eine Lösung von 8,6 g (14,4 mmol) Bariumbis(bistrimethylsilyl)amid *2 THF in 50 ml Toluol/Diethylether (4/1 Vol.-%) bei 25°C zugegeben und 14 Stunden gerührt. Anschließend wurde der entstandenen, gelbe Niederschlag abfiltriert und zweimal mit je 20 ml Diethylether gewaschen. Der Rückstand wurde in 30 ml Tetrahydrofuran aufgenommen und mit 60 ml Pentan überschichtet. Nach 24 Stunden bildete sich ein erster Niederschlag. Zur Vervollständigung der Kristallisation wurden die beiden Phasen vermischt, der Niederschlag abfiltriert und zweimal mit je 20 ml Diethylether gewaschen. Das Dibenzylbarium wurde in eine Ausbeute von 1,82 g (5,7 mmol) entsprechend 40% erhalten. Die Charakterisierung erfolgte mittels ¹H-NMR: 1,99 (s, 4H), 5,37 (t, 2H), 5,75 (d, 4H), 6,42 (t, 4H). (Alle Angaben in ppm, Lösungsmittel d8-THF, Tieffeldsignale des unvollständig deuterierten Lösungsmittels bei 3,58 ppm).

### Beispiel 2:

### Herstellung von Dibenzylbarium durch Umsetzung von Bariumbis(bistrimethylsilyl)amid * 2 Tetrahydrofuran und Benzyllithium * Tetramethylethylendiamin

Zu einer Lösung von 15 g (24,9 mmol) Bariumbis(bistrimethylsilyl)amid *2 THF in 100 ml Diethylether wurden tropfenweise innerhalb von 20 Minuten eine Lösung von 10,67 g (49,8 mmol) Benzyllithium * Tetramethylethylendiamin in 150 ml Diethylether bei 25°C zugegeben und 14 Stunden gerührt. Anschließend wurde der entstandenen, orangefarbene Niederschlag abfiltriert und dreimal mit je 20 ml Diethylether gewaschen. Das Dibenzylbarium wurde in eine Ausbeute von 7,44 g (23,3 mmol) entsprechend 93% erhalten. Die Charakterisierung erfolgte mittels ¹H-NMR: 1,99 (s, 4H), 5,37 (t, 2H), 5,75 (d, 4H), 6,42 (t, 4H).(Alle Angaben in ppm, Lösungsmittel d8-THF, Tieffeldsignale des unvollständig deuterierten Lösungsmittels bei 3,58 ppm).

### Beispiel 3:

### Herstellung von Dibenzylstrontium durch Umsetzung von Strontiumbis(bistrimethylsilyl)amid * 2 Tetrahydrofuran und Benzyllithium * Tetramethylethylendiamin

Zu einer Lösung von 0,50 g (0,90 mmol) Strontiumbis(bistrimethylsilyl)amid *2 THF in 10 ml Diethylether wurden tropfenweise innerhalb von 5 Minuten eine Lösung von 0,38 g (1,77 mmol) Benzyllithium * Tetramethylethylendiamin in 20 ml Diethylether bei 25°C zugegeben. Es bildet sich rasch ein orangefarbener Niederschlag, der nach weiteren 14 Stunden Rühren abfiltriert und mit Diethylether gewaschen wurde.

### Beispiel 4:

### Herstellung von Dibenzylstrontium durch Umsetzung von Strontiumbis-(2,4,6-tri-tert.-butylphenolat) * 3 Tetrahydrofuran und Benzyllithium * Tetramethylethylendiamin

Zu einer Lösung von 2,51 g (3,02 mmol) Strontiumbis-(2,4,6-tritert.-butylphenolat) * 3 Tetrahydrofuran in 15 ml Toluol wurden tropfenweise innerhalb von 10 Minuten eine Lösung von 1,39 g (6,5 mmol) Benzyllithium * Tetramethylethylendiamin in 25 ml Toluol bei 25°C zugegeben. Es bildet sich rasch ein orangefarbener Niederschlag, der nach weiteren 14 Stunden Rühren abfiltriert und mit 20 ml Toluol gewaschen wurde.

### Beispiel 5:

### Herstellung von Bis-(1,1,3-triphenylpropyl)barium * 2 Tetrahydrofuran:

Zu einer Lösung von 150 mg (0,47 mmol) Dibenzylbarium (aus Beispiel 2) in 20 ml Tetrahydrofuran wurden 0,19 ml (1,07 mmol) 1,1-Diphenylethylen (DPE) bei 25°C zugegeben, worauf sich die rote Färbung der Lösung rasch vertiefte. Es wurde 14 Stunden weitergerührt und das Lösungsmittel im Hochvakuum entfernt. Zur weiteren Reinigung wurde das Produkt in 30 ml Benzol gelöst und von unlöslichen Bestandteilen abfiltriert. Das Filtrat wurde im Hochvakuum bis zur Trockene eingeengt und der schwarzviolette Rückstand mit 40 ml Pentan gewaschen. Die Charakterisierung erfolgte mittels ¹H-NMR: 1,27 (m, 8H, THF), 2,67 (m, 4H,CH2, 2,77 (m, 4H,CH2), 3,29 (m, 8H, THF), 6,12 (t, 4H, para), 6,75 (t, 8H, meta), 6,85 (d, 8H, ortho), 7,10 (m, 5H, 3-Phenyl). (Alle Angaben in ppm, Lösungsmittel C₆D₆, unvollständig deuteriertes Lösungsmittel bei 7,15 ppm).

### Beispiel 6:

Zu einer Suspension von 170 mg (0,53 mmol) Dibenzylbarium in 20 ml Toluol und 1 ml Tetrahydrofuran wurden 0,21 ml (1,14 mmol) 1,1-Diphenylethylen (DPE) bei 25°C zugegeben. Es wurde 14 Stunden weitergerührt, worauf aus der Suspension eine tiefrote Lösung entstand.

### Beispiel 7:

Beispiel 6 wurde wiederholt, mit dem Unterschied, daß Ethylbenzol anstelle von Toluol verwendet wurde.

### Beispiel 8

### Polymerisation von Styrol:

Eine Lösung von 48 g (0,46 mol) Styrol in 450 g Cyclohexan wurde mit einer Initiatorlösung nach Beispiel 5 (0,03 mol/l Bis-(1,1,3-triphenylpropyl)barium * 2 Tetrahydrofuran in Ethylbenzol) bis zur schwachen Rotfärbung austitriert, mit 7,5 ml der Initiatorlösung versetzt und bei einer Temperatur zwischen 58 und 65°C eine halbe Stunde polymerisiert. Anschließend wurde die Polymerisation mit 10 ml Isopropanol abgebrochen. Das erhaltene Polystyrol besaß ein zahlenmittleres Molekulargewicht Mn von 99 000 g/mol, ein gewichtsmittleres Molekulargewicht von 145 000 g/mol und eine Dispersität D von 1,46 (Gelpermeationschromatographie in Tetrahydrofuran gegenüber Polystyrolstandard).

## Patentansprüche

1. Verfahren zur Herstellung von Erdalkalidiorganylverbindungen, **dadurch gekennzeichnet, daß** man ein Metallorganyl mit einem kovalenten Metall-Kohlenstoff-Bindungsanteil mit einem Erdalkalisalz umsetzt.

2. Verfahren zur Herstellung von Erdalkalidiorganylverbindungen nach Anspruch 1, **dadurch gekennzeichnet, daß** man ein Metallorganyl RₙM² mit einem Erdalkalisalz M¹Xₘ umsetzt, wobei
M¹ Ca, Sr, Ba,
M² Li, Na, K, Mg,
R ein Metall-Kohlenstoff - σ - gebundener Kohlenwasserstoffrest mit 1 bis 25 C-Atomen,
X Halogenid, Amid, Phosphid, Alkyloxid, Aryloxid und
n,m ganze Zahlen 1 oder 2, entsprechend der Wertigkeit von M¹ bzw. M² und X
bedeuten.

3. Verfahren nach Anspruch 2, **dadurch gekennzeichnet, daß** das Organyl R C₁-C₂₅-Alkyl, C₆-C₂₅-Aryl, C₃-C₁₂-Alkenyl, C₃-C₁₂-Cycloalkyl oder C₃-C₁₂-Cycloalkenyl bedeutet.

4. Verfahren nach einem der Ansprüche 2 oder 3, **dadurch gekennzeichnet, daß** die Erdalkalidiorganylverbindung eine homoleptische Erdalkaliorganylverbindung R₂M¹ mit zwei gleichen Organylen R bedeutet.

5. Verfahren nach einem der Ansprüche 1 bis 4, **dadurch gekennzeichnet, daß** man Barium- oder Strontiumbis(bistrimethylsilyl)amid oder Barium- oder Strontiumbis-(2,4,6-tri-tert.-butylphenolat) mit Benzyllithium oder Dibenzylmagnesium umsetzt.

6. Verfahren nach einem der Ansprüche 1 bis 5, **dadurch gekennzeichnet, daß** man die Umsetzung in einem organischen Lösungsmittel oder Lösungsmittelgemisch durchführt, in dem die entstehende Erdalkalidiorganylverbindungen das niedrigste Löslichkeitsprodukt aller Edukte und Produkte besitzt.

7. Verfahren nach einem der Ansprüche 1 bis 6, **dadurch gekennzeichnet, daß** man die Umsetzung in Diethylether, Toluol oder einer Mischung davon durchführt.

## Claims

1. A process for the preparation of bisorganoalkaline earth metal compounds, which comprises reacting an organometallic compound having a covalent metal-carbon bond content with an alkaline earth metal salt.

2. A process for the preparation of bisorganoalkaline earth metal compounds as claimed in claim 1, which comprises reacting an organometallic compound RₙM² with an alkaline earth metal salt M¹Xₘ, where
M¹ is Ca, Sr or Ba,
M² is Li, Na, K or Mg,
R is a metal-carbon-σ-bonded hydrocarbon having from 1 to 25 carbon atoms,
X is halide, amide, phosphide, alkyl oxide or aryl oxide and
n and m are integers 1 or 2, depending on the valency of M¹ or M² and X.

3. A process as claimed in claim 2, wherein the organic group R is C₁-C₂₅-alkyl, C₆-C₂₅-aryl, C₃-C₁₂-alkenyl, C₃-C₁₂-cycloalkyl or C₃-C₁₂-cycloalkenyl.

4. A process as claimed in either of claims 2 or 3, wherein the bisorganoalkaline earth metal compound is a homoleptic organoalkaline earth metal compound R₂M¹ having two identical organic groups R.

5. A process as claimed in any of claims 1 to 4, which comprises reacting barium bis(bistrimethylsilyl)amide or strontium bis(bistrimethylsilyl)amide or barium bis(2,4,6-tri-tert-butylphenoxide) or strontium bis(2,4,6-tri-tert-butylphenoxide) with benzyllithium or dibenzylmagnesium.

6. A process as claimed in any of claims 1 to 5, which comprises carrying out the reaction in an organic solvent or solvent mixture in which the bisorganoalkaline earth metal compound formed has the lowest solubility product of all starting materials and products.

7. A process as claimed in any of claims 1 to 6, which comprises carrying out the reaction in diethyl ether, toluene or a mixture thereof.

## Revendications

1. Procédé de préparation de composés diorganyle alcalino-terreux, **caractérisé en ce que** l'on fait réagir un organyle métallique comportant une fraction de liaison covalente métal - carbone avec un sel de métal alcalino-terreux.

2. Procédé de préparation de composés diorganyle selon la revendication 1, **caractérisé en ce que** l'on fait réagir un organyle métallique RₙM² avec un sel de métal alcalino-terreux M¹Xₘ, avec
M¹ Ca, Sr, Ba,
M² Li, Na, K, Mg,
R un reste hydrocarbure à liaison métal - carbone σ, comportant de 1 à 25 atomes de C,
X halogénure, amide, phosphure, oxyde d'alkyle, oxyde d'aryle et
n, m nombres entiers 1 ou 2, selon la valence de M¹ ou M² et X.

3. Procédé selon la revendication 2, **caractérisé en ce que** l'organyle R représente un radical alkyle en C₁ à C₂₅, aryle en C₆ à C₂₅, alcényle en C₃ à C₁₂, cycloalkyle en C₃ à C₁₂ ou cycloalcényle en C₃ à C₁₂.

4. Procédé selon l'une des revendications 2 ou 3, **caractérisé en ce que** le composé organo - alcalino-terreux représente un composé organyle alcalino-terreux homoleptique R₂M¹ avec deux organyles R identiques.

5. Procédé selon l'une des revendications 1 à 4, **caractérisé en ce que** l'on fait réagir du bis(bistriméthylsilyl)amide de baryum ou de strontium ou du bis-(2,4,6-tri-tert.-butylphénolate) de baryum ou de strontium avec du benzyllithium ou du dibenzylmagnésium.

6. Procédé selon l'une des revendications 1 à 5, **caractérisé en ce que** l'on entreprend la réaction dans un solvant organique ou un mélange de solvants organiques, dans lequel les composés organo - alcalino-terreux formés présentent le plus petit produit de solubilité de tous les éduits et produits.

7. Procédé selon l'une des revendications 1 à 6, **caractérisé en ce que** l'on entreprend la réaction dans de l'éther diéthylique, du toluène ou un mélange de ceux-ci.
